(19) Europäisches Patentamt
European Patent Office
Office européen des brevets

(11) Veröffentlichungsnummer: **0 214 116**
**A1**

(12) **EUROPÄISCHE PATENTANMELDUNG**

(21) Anmeldenummer: **86890216.4**

(22) Anmeldetag: **23.07.86**

(51) Int. Cl.⁴: **C 25 C 1/20**
C 25 C 7/00

(30) Priorität: **24.07.85 AT 2196/85**

(43) Veröffentlichungstag der Anmeldung:
**11.03.87 Patentblatt 87/11**

(84) Benannte Vertragsstaaten:
**BE CH DE FR GB IT LI LU NL SE**

(71) Anmelder: **ÖGUSSA Österreichische Gold- und Silber-Scheideanstalt Scheid und Roessler Gesellschaft m.b.H. & Co. KG.**
**Gumpendorferstrasse 85**
**A-1060 Wien (AT)**

(72) Erfinder: **Prior, Adalbert, Dr. Dipl.-Ing.**
**Lerchenweg 13**
**CH-2575 Gerolfingen-Biel (CH)**

(74) Vertreter: **Collin, Hans, Dipl.-Ing. Dr. et al**
**Patentanwälte Dipl.-Ing. Dr. Hans Collin Dipl.-Ing. Erwin Buresch Dipl.-Ing. Dr. Helmut Wildhack Dipl.-Ing. Armin Häupl Mariahilfer Strasse 50**
**A-1070 Wien (AT)**

(54) **Elektrolytisches Silberraffinationsverfahren.**

(57) Elektrolytisches Silberraffinationsverfahren, bei dem Rohsilber anodisch aufgelöst und Raffinatsilber kathodisch abgeschieden wird, wobei gleichzeitig aus dem gebrauchten Elektrolyten Begleitmetalle selektiv extrahiert und nach Überführen in eine wässerige Phase gesondert kathodisch abgeschieden werden, sowie der regenerierte, begleitmetallarme Elektrolyt in die Raffination rückgeführt wird und weiterhin in einem gemeinsamen Elektrolysevorgang der gebrauchte Elektrolyt anodisch mit Silber angereichert sowie Begleitmetalle aus der wässerigen Phase kathodisch abgeschieden werden, mit dem Kennzeichen,
daß der gemeinsame Elektrolysevorgang in einer Diaphragmazelle durchgeführt wird, bei der jeweils zwischen einer Kathode und einer Anode ein Diffusionsraum vorgesehen ist, der zum Anodenraum hin durch eine anionische Trennmembran und zum Kathodenraum hin durch eine kationische Trennmembran begrenzt ist und wobei die Diaphragmazelle über den Diffusionsraum mit Begleitmetallextrakt vorzugsweise gesteuerten Säuregehaltes beschickt wird, sowie Vorrichtung zur Durchführung dieses Verfahrens, bei der vorzugsweise vor dem Begleitmetallextrakteinlauf in die Diaphragmazelle ein vom Begleitmetallextrakt durchströmter Säurefänger, insbesondere ein Diffusionsdialysator, vorgesehen ist.

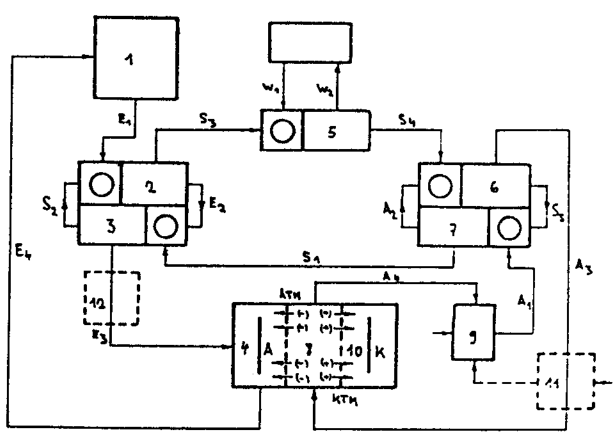

EP 0 214 116 A1

**Beschreibung**

Elektrolytisches Silberraffinationsverfahren

Die Erfindung betrifft ein elektrolytisches Silberraffinationsverfahren, bei dem Rohsilber anodisch aufgelöst und Raffinatsilber kathodisch abgeschieden wird, wobei gleichzeitig aus dem gebrauchten Elektrolyten Begleitmetalle selektiv extrahiert und nach Überführen in eine wässerige Phase gesondert kathodisch abgeschieden werden, sowie der regenerierte, begleitmetallarme Elektrolyt in die Raffination rückgeführt wird, und bei dem weiterhin in einem gemeinsamen Elektrolysevorgang der gebrauchte Elektrolyt anodisch mit Silber angereichert sowie Begleitmetalle aus der wässerigen Phase kathodisch abgeschieden werden, wobei als Extraktionsschritt(e) gegebenenfalls ein Flüssigmembranpermeation, vorzugsweise in Kombination mit einer Lösungsmittelextraktion, vorgesehen ist.

Ein elektrolytisches Silberraffinationsverfahren, bei dem Rohsilber anodisch aufgelöst und Raffinatsilber kathodisch abgeschieden wird, wobei gleichzeitig aus dem gebrauchten Elektrolyten Begleitmetalle selektiv extrahiert und nach Überführen in eine wässerige Phase gesondert kathodisch abgeschieden werden, sowie der regenerierte, begleitmetallarme Elektrolyt in die Silberelektrolyse rückgeführt wird, ist bekannt und ein derartiges Verfahren mit Anlage ist beispielsweise in der CH-PS 614 238 beschrieben.

Bei der elektrolytischen Silberraffination, die üblicherweise nach dem Möbius- oder Balbach/Thumverfahren durchgeführt wird, sind die im Anodenrohsilber vorhandenen unedleren Begleitmetalle, insbesondere das Kupfer, eine wesentliche Belastung des Verfahrens, da sie gelöst werden und sich im Elektrolyten anreichern. In üblichen Silbernitratbädern wird ein Cu-Gehalt von etwa 60 g/l als höchstzulässiger Wert angesehen; darüber kann eine kathodische Kupferabscheidung eintreten, zumindest aber werden vom Raffinatsilber Cu-Salze eingeschlossen, so daß die Feinheitsanforderungen nicht mehr erfüllt werden. Der gebrauchte Elektrolyt muß daher regeneriert oder von Zeit zu Zeit ausgetauscht werden.

Es wurde dabei bereits mit Elektrolytkreislauf gearbeitet, wobei gebrauchter Elektrolyt aus der Raffinationszelle abgezogen, auf dem Extraktionsweg Cu daraus entfernt und der so regenerierte, Cu-arme Elektrolyt wieder in die Raffinationszelle rückgeführt wurde. Das extrahierte Cu wurde in eine wässerige Phase übergeführt und gesondert kathodisch abgeschieden. Als selektive Extraktionsmittel für Cu ist eine große Zahl organisches Reagenzien bekannt geworden; so arbeitet z.B. das oben beschriebene bekannte Verfahren nach dem Prinzip der Lösungsmittelextraktion mit Chelatbildnern wie Phenonoximen oder Chinolinen. Dabei wird der gebrauchte Elektrolyt in Mixer/Settleranlagen extrahiert und aus der organischen Extraktphase das Cu mit einer sauren Abstreiflösung abgestreift. Die beladene Abstreiflösung wird elektrolysiert, wobei Cu sowie gegebenenfalls auch Ni kathodisch abgeschieden werden können. Je nach dem Chelatbildner und den Arbeitsbedingungen ist es möglich, Begleitmetalle mehr oder weniger selektiv zu extrahieren. Die organische Phase (Lösungsmittel + Extraktionsmittel) wird gewaschen. Die organische Phase, die durch Elektrolyse regenerierte Abstreiflösung sowie der regenerierte Elektrolyt werden im Kreislauf geführt.

Infolge der gleichzeitigen Lösung von Cu und Ag an der Anode wird an der Kathode mehr Ag abgeschieden, als an der Anode aufgelöst wird. Der Elektrolyt verarmt daher an Silber und es ist nötig, dem regenerierten Elektrolyten zum Ausgleich reines Silbernitrat (als Lösung) zuzusetzen. Dies stellt eine Belastung des Verfahrens dar, da reines Silbernitrat ein teures Produkt darstellt.

Zur Schaffung eines Verfahrens der eingangs genannten Art, bei dem eine kontinuierliche vollständige Regenerierung des Elektrolyten erfolgt, bei der auch der Silbermangel ohne Zusatz von Silbernitratlösung ausgeglichen wird, wurde bereits vorgeschlagen, daß in einem gemeinsamen Elektrolysevorgang der gebauchte Elektrolyt anodisch mit Silber angereichert sowie Begleitmetalle aus der wässerigen Phase kathodisch abgeschieden werden, wobei als Extraktionsschritt(e) gegebenenfalls eine Flüssigmembranpermeation, vorzugsweise in Kombination mit einer Lösungsmittelextraktion, vorgesehen ist.

Die Anlage zur Durchführung dieses Verfahrens weist dementsprechend neben mindestens einer Raffinationszelle, mindestens einer Elektrolysezelle zur kathodischen Abscheidung der Begleitmetalle und mindestens einer Extraktionseinrichtung zur Extraktion der Begleitmetalle aus dem gebrauchten Elektrolyten und zur Überführung der extrahierten Begleitmetalle in eine wässerige Phase mindestens eine gemeinsame Elektrolysezelle zur Anreicherung des gebrauchten Elektrolyten mit Silber und zur kathodischen Abscheidung der Begleitmetalle auf, die vorzugsweise als Diaphragmazelle mit einem anionischen Diaphragma ausgebildet ist.

In der gemeinsamen Elektrolysezelle wird Ag anodisch aufgelöst, wobei vorteilhaft eine Rohsilberanode eingesetzt wird, da der Begleitmetallgehalt nicht vollständig eliminiert, sondern nur herabgesetzt zu werden braucht. Der bei der kathodischen Abscheidung der Begleitmetalle an der Kathode freiwerdende Strom unterstützt die Auflösung der Silberanoden.

Das anionische Diaphragma hat dabei die Aufgabe, zu verhindern, daß Silber in den Kathodenraum gelangt, wo es zusammen mit den Begleitmetallen wieder ausgeschieden würde, sowie die für die Bildung von $AgNO_3$ notwendigen $NO_3$-Ionen in den Anodenraum zu transportieren.

Durch geeignete Auswahl der Begleitmetallextraktionsmittel, von denen sich die Chelatbildner am selektivsten erwiesen haben, ist es möglich, die Mitextraktion von Silber soweit zu unterdrücken, daß die elektrolytische Wiederbeladung des gebrauchten Raffinationselektrolyten mit Silber auch vor der Begleitmetallextraktion durchgeführt werden kann.

Zur Begleitmetallextraktion wird üblicherweise eine Lösungsmittelextraktion durchgeführt, wobei zuerst der

gebrauchte Raffinationselektrolyt mit einer Lösungsmittel/Extraktionsmittelphase behandelt und diese anschließend mit einer gleichionigen ($NO_3-$) Abstreiflösung gestrippt wird.

Es wurde jedoch gefunden, daß bezüglich der Extraktion anderer Begleitmetalle als Cu, von denen insbesondere Pb, Platinmetalle wie Pd oder Pt, Ni, W, Zn und Cd in Frage kommen, Vorteile erzielt werden können, wenn als Extraktionsverfahren die Flüssigmembran-Permeation angewendet wird, wobei auch Kombinationen von Lösungsmittelextraktion und Flüssigmembranpermeation angewendet werden können.

Hiebei dient die Lösungsmittel/Extraktionsmittelphase als Trennmembran zwischen dem gebrauchten Raffinationselektrolyten und der sauren Abstreiflösung, die in der Trennmembran emulgiert wird. Nach dem Übertritt (Permeation) des Begleitmetalls oder der Begleitmetalle aus dem Raffinationselektrolyten in die organische Emulsionsphase wird die Emulsionsphase abgetrennt und in bekannter Weise in eine wässerige Phase (beladene Abstreiflösung) und eine organische Phase (Lösungsmittel/Extraktionsmittel) desintegriert. Die beladene Abstreiflösung wird durch anschließende Begleitmetallelektrolyse oder Wertstoffabtrennung ohne Elektrolyse wieder regeneriert und erneut in der organischen Phase emulgiert. Die organische Phase dient hier nur als selektives Trennmedium zwischen den wässerigen Phasen (gebrauchter Raffinationselektrolyt und Abstreiflösung), so daß sie nicht, wie bei der Flüssig/Flüssigextraktion, das Begleitmetall aufnehmen muß. Dies ergibt einen deutlich verringerten Lösungsmittelaufwand sowie hohe Anreicherungsraten, z.B. im Bereich von 1:100.

Es hat sich gezeigt, daß der Vorschlag gemäß der CH-PS 614 238, die begleitmetallbeladene organische Extraktphase mit einer schwefelsauren Abstreiflösung zu reextrahieren, technologisch nachteilig ist, da die abgestreifte organische Lösungsmittel/Extraktionsmittelphase vor der Rückführung in die Extraktionsstufe sulfationenfrei gewaschen werden muß, um den Raffinationselektrolyten (salpetersaure Lösung) nicht zu verunreinigen.

Dementsprechend wurde vorgeschlagen, vorteilhaft ausschließlich mit gleichionigen, insbesondere salpetersauren Lösungen auch beim Abstreifen zu arbeiten, sodaß dieses Problem nicht auftritt, insbesondere der Betrieb der gemeinsamen Elektrolysezelle zur kathodischen Begleitmetallabscheidung und zur anionischen Silberanreicherung störungsfrei möglich ist.

Es mußte dabei auf der anderen Seite jedoch in Kauf genommen werden, daß, da z.B. das Kupfer in der Praxis praktisch lediglich aus schwefelsauren Lösungen in einer günstigen Form elektrolytisch abscheidbar ist, die Kupferabscheidung aus dem salpetersauren Milieu nicht optimal ist.

Weiterhin hat sich herausgestellt, daß beim vorgeschlagenen Verfahren in der Diaphragmazelle ein gewisser Silberschlupf auftritt, sodaß das kathodisch abgeschiedene Kupfer eine Silberdotierung aufweist.

Es bestand somit die Aufgabe, zur Vermeidung dieser Nachteile den gemeinsamen Elektrolysevorgang, bei dem einerseits der gebrauchte Elektrolyt anodisch mit Silber angereichert sowie andererseits die reextrahierten Begleitmetalle, insbesondere Kupfer, aus der wässerigen Phase kathodisch abgeschieden werden, so zu führen, daß die Kathodenvorgänge völlig unabhängig von den Anodenvorgängen sind.

Diese Aufgabe wird erfindungsgemäß vor allem dadurch gelöst, daß der gemeinsame Elektrolysevorgang in einer Diaphragmazelle durchgeführt wird, bei der jeweils zwischen einer Kathode und einer Anode ein Diffusionsraum vorgesehen ist, der zum Anodenraum hin durch eine anionische Trennmembran und zum Kathodenraum durch eine kationische Trennmembran begrenzt ist und wobei die Diaphragmazelle über den Diffusionsraum mit Begleitmetallextrakt vorzugsweise gesteuerten Säuregehaltes beschickt wird.

Dies ermöglicht unter anderem, daß im Kathodenraum vorteilhaft ein schwefelsaures Milieu anstelle eines salpetersauren Milieus vorgesehen werden und somit das Kupfer optimal abgeschieden werden kann und weiterhin keinerlei Silberschlupf zur Kathode hin stattfinden kann, das abgeschiedene Kupfer mithin silberfrei ist.

Dabei wird die reextrahierte, stark salpetersaure Kupferlösung, d.h. die Cu-angereicherte Abstreiflösung, in den Diffusionsraum der Diaphragmazelle, die im folgenden Membranzelle bzw. Membranelektrolysezelle genannt wird, eingespeist. Von dort wandern einerseits die Kupferkationen durch die Kationentauschermembran in den Kathodenraum und andererseits die Nitratanionen durch die Anionenmembran in den Anodenraum, wobei an der Kathode das Kupfer aus schwefelsaurer Lösung abgeschieden und an der Anode Silber als Silbernitrat gelöst wird. Dabei verhindert die Anionentauschermembran die Diffusion der Silberionen und die Kationentauschermembran die Diffusion der Sulfationen in den Diffusionsraum.

Die Cu-abgereicherte Abstreiflösung wird aus dem Diffusionsraum der Membranzelle abgeführt und nach Einstellung des Säuregehaltes wieder in den Reextraktor (Abstreifer) rückgeführt.

Je nach der Fahrweise der Membranzelle können sich hohe Säurekonzentrationsunterschiede zwischen Anoden- und Kathodenraum mehr oder weniger negativ auswirken. Zur Vermeidung dieser Nachteile wird weiterhin erfindungsgemäß vorgeschlagen, den Säuregehalt der in die Membran zelle eingespeisten Begleitmetallösung zu steuern. Dies geschieht vorteilhaft durch Zwischenschaltung eines Säurefängers insbesondere eines Diffusionsdialysators zwischen Abstreifer und Membranzelle. Diffusionsdialysatoren sind bekannte Systeme, die mit Hilfe von handelsüblichen Austauschermembranen aus sauren Salzlösungen gezielt Säure an im Gegenstrom geführtes Wasser abgeben. Auf diese Weise können Schwankungen im System ausgeglichen und mit sehr hoher Säurekonzentration abgestreift werden; die Membranzelle wird jeweils in der günstigsten Weise gefahren.

Das erfindungsgemäße Verfahren wird im folgenden an Hand von Beispielen unter Bezugnahme auf die Zeichnung näher erläutert, in der ein Fließbild einer erfindungsgemäßen Anlage zu seiner Durchführung dargestellt ist.

Aus der Raffinationszelle 1 gelangt der verbrauchte, d.h. an Silber verarmte und mit Kupfer angereicherte Elektrolyt $E_1$ in einen zweistufigen Extraktionsmischer 2,3, wo er im Gegenstrom mit einem selektiven Cu-Extraktionsmittel durch Flüssig/flüssigextraktion (Solventextraktion) extrahiert wird.

Als Solventextraktionsmittel für Kupfer sind z.B. Kationentauscher wie Versaticsäure (synthetische Carbonsäuremischung aus hochverzweigten Isomeren von $C_{10}$-Monocarbonsäuren mit hauptsächlich tertiärer Struktur; Handelsprodukt z.B. Versatic 911) und HDEHP (bis-(-2-Äthyl-hexyl)-phosphorsäure) sowie Chelatbildner wie z.B. Oximen der Formel

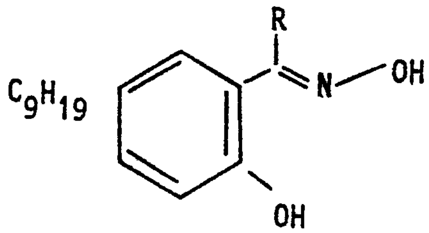

geeignet, wobei die Chelatbildner für Cu selektiver sind, während mit den genannten Kationentauschern immer Ag mitextrahiert wird.

Als Beispiele für Chelatbildner mit Oximen der obigen Formel werden folgende Handelsprodukte genannt:
SME 529 (enthält Oxim mit $R = CH_3$)
LIX 64N (enthält Oxim mit $R = C_6H_5$ und Oxim der Formel

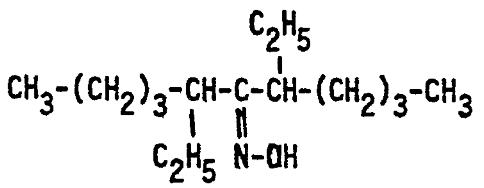

)

ACORGA P 5300
ACORGA P 5100 (enthalten Oxim mit R = H, 4-Nonylphenol und Kerosin)

ACORGA Pt 5050 (enthält Oxim mit R = H, Tridecanol und Kerosin)

Dabei treten der verbrauchte Elektrolyt $E_1$ und das bereits einmal beladene Solventextraktionsmittel $S_2$ in den Mischer der ersten Extraktionseinheit 2, sowie das regenerierte Solventextraktionsmittel $S_1$ und der einfach an Kupfer abgereicherte Elektrolyt $E_2$ in den Mischer der zweiten Extraktionseinheit 3 ein.

Aus dem Settler der zweiten Extraktionseinheit 3 wird der zweifach an Kupfer abgereicherte Elektrolyt $E_3$ in den Anodenraum 4 einer Membranelektrolysezelle 4,8,10,eingespeist, wo er durch elektrolytisches Auflösen einer Silberanode in salpetersaurer Lösung mit $AgNO_3$ angereichert wird und dann als regenerierter Elektrolyt $E_4$ zur Raffinationszelle 1 zurückgeführt.

Aus dem Settler der ersten Extraktionseinheit 2 gelangt das zweifach angereicherte Solventextraktionsmittel $S_3$ in den Mischer eines Waschextraktors 5, wo durch Waschen mit Kupfernitratlösung $W_1$ das mitextrahierte Silber entfernt wird. Die mit Silber beladene Waschlösung $W_2$ wird aus dem Settler des Waschextraktors 5 abgezogen und in üblicher Weise weiterverarbeitet; das an Silber abgereicherte Solventextraktionsmittel $S_4$ wird in einem zweistufigen Reextraktionsmischer 6,7 reextrahiert, d.h. mit wässeriger Salpetersäure im Gegenstrom kupferfrei gewaschen.(abgestreift). Dabei werden das abzustreifende Solventextraktionsmittel $S_4$ und die einfach mit Kupfer angereicherte Abstreifsäure $A_2$ in den Mischer der ersten Reextraktionseinheit 6 sowie die frische (regenerierte) Abstreifsäure $A_1$ und das einfach an Kupfer abgereicherte Solventextraktionsmittel $S_5$ in den Mischer der zweiten Reextraktionseinheit 7 eingespeist.

Aus dem Settler der zweiten Reextraktionseinheit 7 wird das zweifach an Kupfer abgereicherte und somit regenerierte Solventextraktionsmittel $S_1$ in den Mischer der ersten Extraktionseinheit 3 zur Schließung des Kreislaufes rückgeführt; aus dem Settler der ersten Reextraktionseinheit 6 gelangt die zweifach mit Kupfer beladene Abstreiflösung $A_3$ als stark saure Kupfernitratlösung in den Diffusionsraum 8 der Membranelektrolysezelle 4,8,10, in der anodisch Silber aufgelöst und kathodisch Kupfer abgeschieden wir. Von der Abstreiflösung $A_3$ werden dabei Nitratanionen über die Anionentauschermembran ATM in den Anodenraum 4 abgegeben und entsprechend Kupferkationen über die Kationentauschermembran KTM in den Kathodenraum 10, in dem schwefelsaures Milieu herrscht.

Die auf diese Weise an Kupfer und Nitrationen abgereicherte Abstreiflösung $A_4$ wird in einen Mischtank 9 abgezogen, wo der Säuregehalt mit Salpetersäure ergänzt wird, und dann als regenerierte (frische)

Abstreifsäure $A_1$ zum Mischer der zweiten Reextraktionseinheit 7 zur Schließung des Kreislaufes rückgeführt.

In der Anlage kann zwischen der Reextraktor(Abstreifer)-Gruppe 6,7 und der Membran elektrolyse zelle 4,8,10 ein Diffusions dialysator 11 angeordnet werden, der aus der Abstreiflösung $A_3$ mit Wasser Salpetersäure herauswäscht, die direkt in den Mischtank 9 geleitet wird. Damit kann die Säurekonzentration in der Abstreiflösung $A_3$ beim Eintritt in die Membran elektrolysezelle auf den jeweils optimalen Wert gesteuert werden.

Es ist weiterhin möglich, wie bereits vorgeschlagen wurde, daß aus dem gebrauchten Elektrolyten nach der Cu-Abtrennung, aber vor der Silberanreicherung, weitere Begleitmetalle, insbesondere Cd, Ni, Pd, Pt, Bi und/oder W extrahiert werden. Zu diesem Zweck ist in der Zeichnung zwischen dem Settler der zweiten Extraktionseinheit 3 und dem Anodenraum 4 der Membranelektrolysezelle 4,8,10 im Weg des zweifach an Kupfer abgereicherten Elektrolyten $E_3$ schematisch eine weitere Extraktionseinheit 12 eingezeichnet.

Man kann auch Begleitmetalle zusammen mit dem Kupfer extrahieren und dann durch selektives Abstreifen trennen.

Wie bereits vorgeschlagen, kann auch so vorgegangen werden, daß der verbrauchte Elektrolyt $E_1$ nicht zuerst entkupfert, sondern zuerst mit Silber angereichert und anschließend entkupfert wird. Diese Vorgangsweise setzt den Einsatz eines Chelatbildners als Solventextraktionsmittel voraus, um das unnütze Mitschleppen von Silber zu verhindern.

Die in der Membranelektrolysezelle 4,8,10 und dem Diffusionsdialysator zum Einsatz kommenden Anionen- bzw. Kationentauschermembranen sind handelsüblich und werden von verschiedenen Firmen mit abgestuftem Leistungsspektrum angeboten.

## Patentansprüche

1. Elektrolytisches Silberraffinationsverfahren, bei dem Rohsilber anodisch aufgelöst und Raffinatsilber kathodisch abgeschieden wird, wobei gleichzeitig aus dem gebrauchten Elektrolyten Begleitmetalle selektiv extrahiert und nach Überführen in eine wässerige Phase gesondert kathodisch abgeschieden werden, sowie der regenerierte, begleitmetallarme Elektrolyt in die Raffination rückgeführt wird, und bei dem weiterhin in einem gemeinsamen Elektrolysevorgang der gebrauchte Elektrolyt anodisch mit Silber angereichert sowie Begleitmetalle aus der wässerigen Phase kathodisch abgeschieden werden, wobei als Extraktionsschritt(e) gegebenenfalls eine Flüssigmembranpermeation, vorzugsweise in Kombination mit einer Lösungsmittelextraktion, vorgesehen ist, dadurch gekennzeichnet, daß der gemeinsame Elektrolysevorgang in einer Diaphragmazelle durchgeführt wird, bei der jeweils zwischen einer Kathode und einer Anode ein Diffusionsraum vorgesehen ist, der zum Anodenraum hin durch eine anionische Trennmembran und zum Kathodenraum hin durch eine kationische Trennmembran begrenzt ist und wobei die Diaphragmazelle über den Diffusionsraum mit Begleitmetallextrakt vorzugsweise gesteuerten Säuregehaltes beschickt wird.

2. Vorrichtung zur Durchführung des Verfahrens nach Anspruch 1, mit mindestens einer Raffinationszelle, mindestens einer Extraktionseinrichtung zur Extraktion von Begleitmetallen aus dem gebrauchten Elektrolyten und zur Überführung der extrahierten Begleitmetalle in eine wässerige Phase, und mindestens einer Elektrolysezelle zur kathodischen Abscheidung von Begleitmetallen aus der wässerigen Phase, bei der mindestens eine gemeinsame Elektrolysezelle zur Anreicherung des gebrauchten Elektrolyten mit Silber und zur kathodischen Abscheidung von Begleitmetallen in Form einer Diaphragmazelle vorgesehen ist, dadurch gekennzeichnet, daß die Diaphragmazelle zwischen jeweils einer Kathode (K) und einer Anode (A) einen Diffusionsraum (8) zur Aufnahme eines Begleitmetallextraktes aufweist, der zum Anodenraum (4) hin durch eine anionische Trennmembran (ATM) und zum Kathodenraum (10) hin durch eine kationische Trennmembran (KTM) begrenzt ist.

3. Vorrichtung nach Anspruch 2, dadurch gekennzeichnet, daß vor dem Begleitmetallextrakteinlauf in die Diaphragmazelle ein vom Begleitmetallextrakt durchströmter Säurefänger(11) insbesondere ein Diffusionsdialysator, vorgesehen ist.

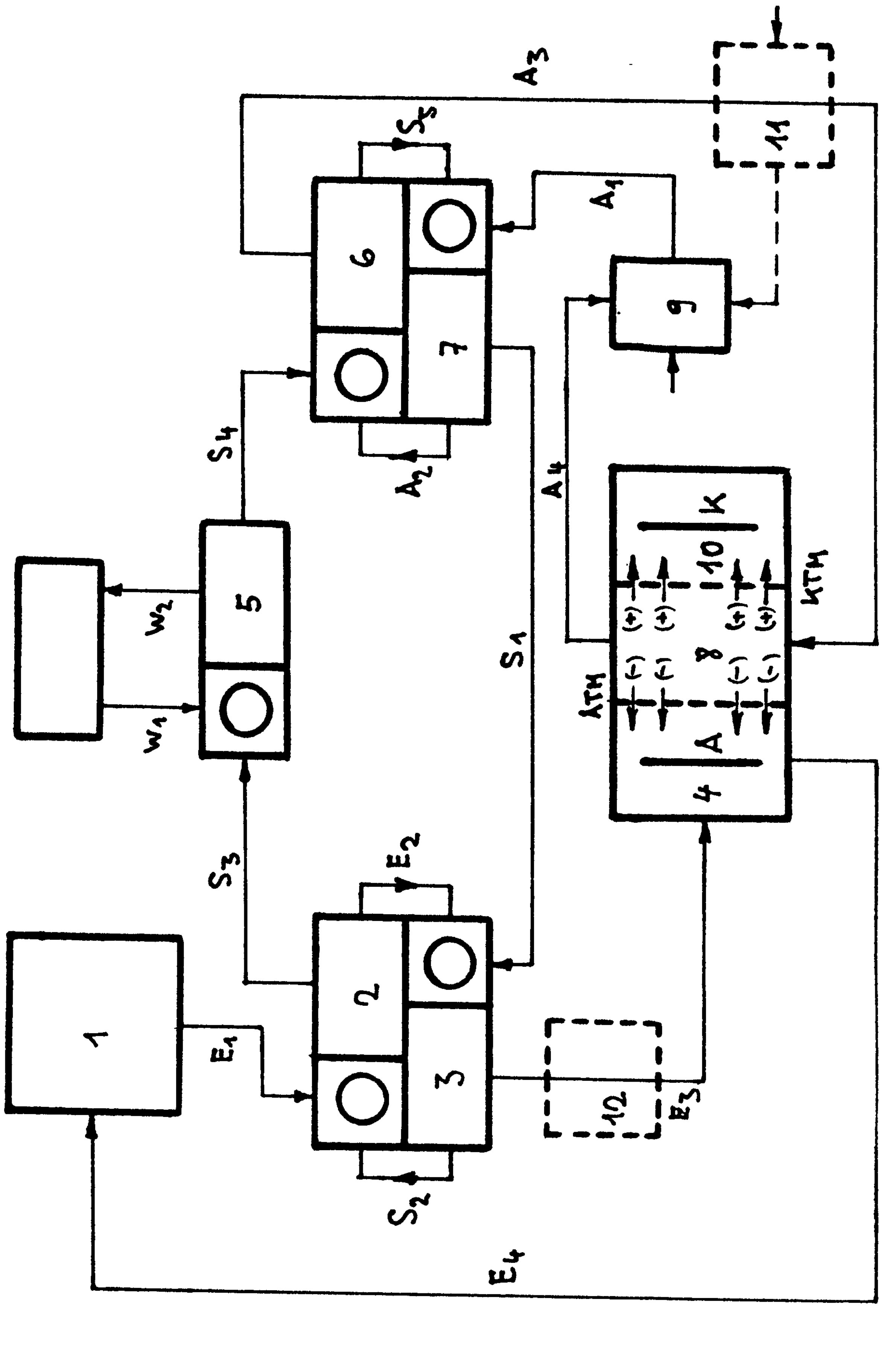
1
2
3
4
5
6
7
8
9
10
11
12
A
K
E1
E2
E3
E4
S1
S2
S3
S4
S5
A1
A2
A3
A4
W1
W2

Europäisches Patentamt

# EUROPÄISCHER RECHERCHENBERICHT

Nummer der Anmeldung

EP 86890216.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | EP - A1 - 0 138 801 (ÖGUSSA)<br>* Ansprüche; Fig. 1 *<br>-- | 1 | C 25 C 1/20<br>C 25 C 7/00 |
| D,A | CH - A5 - 614 238 (BROOKSIDE)<br>* Zusammenfassung; Fig. 1 *<br>---- | 1 | |

RECHERCHIERTE SACHGEBIETE (Int. Cl 4)

C 25 C

Der vorliegende Recherchenbericht wurde für alle Patentansprüche erstellt.

| Recherchenort | Abschlußdatum der Recherche | Prüfer |
|---|---|---|
| LUX | 29-10-1986 | LUX |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82